**Europäisches Patentamt**

**European Patent Office**

**Office européen des brevets**

(19)

(11) Veröffentlichungsnummer : **0 095 797**
**B1**

(12) # EUROPÄISCHE PATENTSCHRIFT

(45) Veröffentlichungstag der Patentschrift :
07.09.88

(21) Anmeldenummer : 83200656.3

(22) Anmeldetag : 06.05.83

(51) Int. Cl.⁴ : **A 47 J 36/38**

(54) **Vorrichtung zum Kondensieren von Kochdämpfen.**

(30) Priorität : 27.05.82 DE 3219912

(43) Veröffentlichungstag der Anmeldung :
07.12.83 Patentblatt 83/49

(45) Bekanntmachung des Hinweises auf die Patenterteilung : 07.09.88 Patentblatt 88/36

(84) Benannte Vertragsstaaten :
AT BE CH DE FR GB LI NL

(56) Entgegenhaltungen :
DE-A- 2 524 089
DE-A- 2 526 450
DE-A- 2 931 824
DE-C-     14 540
DE-C-    634 984
FR-A-    684 509
FR-A- 2 474 295

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
BE CH FR GB LI NL AT

(72) Erfinder : Schröder, Johann, Dr.
Adenauerallee 125a
D-5100 Aachen (DE)
Erfinder : v. d. Molen, Hielke
van Leeuvenshoekstraat 146
NL-7908 BN Hoogeveen (NL)

(74) Vertreter : Piegler, Haraid, Dipl.-Chem. et al
Philips Patentverwaltung GmbH Wendenstrasse 35
Postfach 10 51 49
D-2000 Hamburg 1 (DE)

**Beschreibung**

Die Erfindung betrifft eine Vorrichtung zum Kondensieren und gegebenenfalls Rückführen von Kochdämpfen, bestehend aus einem verschließbaren Kochgefäß, das über eine Leitung mit einem Kondensor verbunden ist, dessen Kühlgefäß ein Kühlmittel enthält, wobei das Kühlmittel und die Kochdämpfe bzw. kondensierte Kochdämpfe durch eine Wand getrennt sind.

Kochdämpfe sind z. B. Wasserdampf oder Gemische aus Wasserdampf und anderen flüchtigen Stoffen, die beim Kochen, Fritieren, Braten und Backen entstehen. Unter einem Kochgefäß ist auch ganz allgemein ein Verdampfungsgefäß oder ein Brat- oder Fritiergefäß zu verstehen.

Aus DE-A-2 931 824 ist ein Haushalt-Wäschetrockner mit einer in ein Gehäuse eingeschlossenen Einrichtung zum Niederschlagen der aus der Wäsche ausgetriebenen Feuchtigkeit bekannt, bei dem Teile des Gehäuses mit Hohlräumen Wärmekontakt haben, die mit einem bei Raumtemperatur (20° C) festen, bei etwa 30 bis 55° C unter Einsatz einer möglichst großen Schmelzwärme sich verflüssigenden Wärmespeichermittel gefüllt sind. Dabei kann auf eine Fremdkühlung völlig verzichtet werden, wenn die Schmelzwärme des Wärmespeichermittels mindestens so groß ist, wie es zum Kondensieren der gesamten in der vollen Wäscheladung für einen Trockenvorgang enthaltenen Feuchtigkeit nötig ist. Dann nimmt nämlich das Warmespeichermittel die beim Kondensieren abgegebene Wärmeenergie unter Verflüssigung vollständig auf.

Eine Vorrichtung der eingangs genannten Art ist aus DE-C-14 540 bekannt. Der Kondensor dieser bekannten Vorrichtung besteht aus einem Kondensationsrohr, das in einem mit Wasser gefüllten Kühlgefäß angeordnet ist. Der Wirkungsgrad einer Kühlung durch Wasser ist jedoch unbefriedigend, da die Wärmekapazität des Wassers (4,2 kJ/kg K) relativ gering ist gegenüber seiner Verdampfungswärme (2 268 kJ/kg). Zur Kondensation des Wassers ist daher eine sehr große Menge Wasser mit entsprechend großem Behälter erforderlich, oder die Temperatur des Wassers im Kondensor steigt schnell über den Siedepunkt, und Dampf- wie Geruchsbelästigung erfolgen anstatt aus dem Kessel jetzt aus dem Kondensor. Außerdem bildet sich dadurch ein Überdruck aus. Dieser Überdruck soll zwar laut DE-C-14 540 durch Überdruckventile kontrolliert werden. Da dieser Druck aber durch weiteres Erwärmen ständig ansteigt, wird bald überhitzter Wasserdampf über das Ventil entweichen müssen mit entsprechender Dampf- und Geruchsbelästigung sowie einer zusätzlichen Geräuschbelästigung. Außerdem sind solche Ventile aufwendig und teuer, da ihre Funktion absolut sicher sein muß, um eine Explosion der Gefäße auszuschließen. Gleiches gilt für Kochkessel oder Brattopf und Kondensor sowie alle Dichtungen und Verschlüsse, die natürlich gegen Überdruck stabil und dicht sein müssen.

In DE-C-14 540 wird von einem Stand der Technik ausgegangen, bei dem der aus den Sicherheitsventilen dicht verschlossener Kochkessel während des Garkochens entweichende Wrasen dadurch beseitigt wird, daß man ihn entweder unter den Rost der Feuerung führt oder durch Einleiten in Wasser direkt kondensiert. In beiden Fällen wird das kochende Quantum um die nicht unerhebliche, von der Kochdauer abhängige Wrasenmenge vermindert. Es muß daher, um eine gewisse Masse fertigen Kochproduktes zu erhalten, von vornherein eine dem abgehenden Wrasen entsprechende Wassermenge mehr zugesetzt und verdampft werden. Auch entweichen mit demselben Substanzen, welche besser im Kochprodukt verblieben. Die gebräuchliche Art des Kochens bei offenen Sicherheitsventilen bedingt daher eine unnötige Größe der Kessel, sowie beträchtliche Wärmeund Zeitverluste. Auch werden bei unaufmerksamer Handhabung infolge übermäßiger Verdampfung nicht allein die Speisen, sondern auch die Kessel selbst angebrannt. Bei der Vorrichtung nach DE-C-14 540 ist daher in jedem Falle eine Rückführung des Wrasens bzw. der Kochdämpfe vorgesehen, die aber auf diese Weise mit der erheblichen Menge Kühlwasser stark verdünnt würden.

Die Erfindung befaßt sich demgegenüber mit dem Problem, daß die Bereitung von warmen Speisen durch Kochen, Fritieren, Braten und Backen in Abhängigkeit von der Art der Speise mit einer mehr oder weniger starken, und in vielen Fällen unerwünschten Geruchsbelastung der Küche und anliegender Wohnräume verbunden ist.

Es hat nicht an Bemühungen gefehlt, dieser Geruchsbelästigung durch Luftreinigung (z. B. Filterung) entgegenzuwirken. Die beim Kochen freigesetzten Geruchsstoffe wirken aber schon in sehr geringer Konzentration. Es müssen also immer riesige Gasmengen (hauptsächlich Luft und Wasserdampf) durch ein Filter gepumpt werden, um winzige Mengen an Geruchsstoffen daraus zu entfernen. Es ist einzusehen, daß das Ergebnis dieser Maßnahmen nicht sehr befriedigend sein kann. Die Filtermaterialmenge muß sehr groß sein, die Wirksamkeit nimmt schnell ab und der Reinigungseffekt ist im allgemeinen ungenügend.

Die meisten zum Kochen verwendeten Lebensmittel enthalten schon einen großen Anteil an Wasser. Außerdem wird zum Kochen noch mehr oder weniger viel Wasser hinzugefügt (z. B. auch in Form von Milch, Margarine, Soßen und anderen wasserhaltigen Zutaten). Zum Bereiten der Speisen werden diese dann erhitzt, wobei ein großer Teil des enthaltenen und zugefügten Wassers verdampft und gasförmig an die Raumluft abgegeben wird. Dabei werden aus nur 18 cm$^3$ flüssigem Wasser etwa 30 000 cm$^3$ Wasserdampf gebildet. Mit dieser relativ großen Gasmenge werden auch die weniger flüchtigen, zum Teil unangenehm riechenden, höhermolekularen Geruchsstoffe (z. B. Amine, Thiole, Sulfide, Thiophene, Fettsäuren, Aldehyde, Phenole, Pyridinderivate, Indole usw.) mit in die Luft transportiert. Ihr Volumenanteil entspricht dabei ihrem Partialdruck (Dalton) ; d. h. daß in den 30 000 $cm^3$ Wasserdampf z. B. 3 000 $cm^3$ unangenehm riechender Buttersäure oder 30 $cm^3$ relativ schwer flüchtiges 3-Methylindol mitgeführt werden können. Die Geruchsstoffe gelangen also im wesentlichen durch Wasserdampfdestillation in die Raumluft und sind, mit einem sehr großen Volumen an Wasserdampf und Luft vermischt, nur äußerst schwierig wieder zu entfernen.

Aufgabe der Erfindung ist es, eine Vorrichtung zu schaffen, mit der der beim Kochen entweichende Wasserdampf kondensiert wird und damit auch die mitgeführten Geruchsstoffe im Kondensat aufgefangen werden. Weder im Kochgefäß noch im Kondensor soll dabei ein Überdruck entstehen können.

Diese Aufgabe wird erfindungsgemäß durch eine Vorrichtung der eingangs genannten Art gelöst, deren Kondensor als Kühlmittel ein Latentspeichermittel enthält, dessen Schmelzpunkt zwischen 25 und 70° C liegt und dessen Menge so bemessen ist, daß seine Schmelzwärme der zu kondensierenden Wassermenge wenigstens äquivalent ist.

Die Kondensation erfolgt also erfindungsgemäß durch einen Latentwärmespeicher. Das nach der Kondensation noch verbleibende Gasvolumen beträgt nur noch wenige Promille der ursprünglich verdampften Menge. Sollte diese kleine Restmenge immer noch eine Geruchsbelästigung verursachen, so können nun sehr viel effektiver und über wesentlich längere Benutzungszeiten die noch verbleibenden Geruchsstoffe durch ein nachgeschaltetes Filter (z. B. aus Aktivkohle) entfernt werden. Experimentelle Untersuchungen zeigen aber, daß dies im allgemeinen überflüssig ist.

Vorteilhafte Ausgestaltungen der Erfindung bestehen darin,

— daß in dem Kondensor Speicherplatten angeordnet sind, die das Latentwärmespeichermittel enthalten,

— daß die Speicherplatten zu einem Speichergefäß mit großer, gewellter oberfläche zusammengefaßt sind,

— daß der Kondensor bzw. die Speicherplatten als Latentwärmespeichermittel Paraffine, Salzhydrate oder Salzhydratmischungen enthalten und

— daß der Kondensor über eine Kondensatrücklaufleitung mit einem Hahn mit dem Kochgefäß verbunden ist.

Die Erfindung wird anhand einer Zeichnung und eines Ausführungsbeispiels näher erläutert. In der Zeichnung zeigen

Fig. 1 und

Fig. 2 schematische Darstellungen von Kochvorrichtungen.

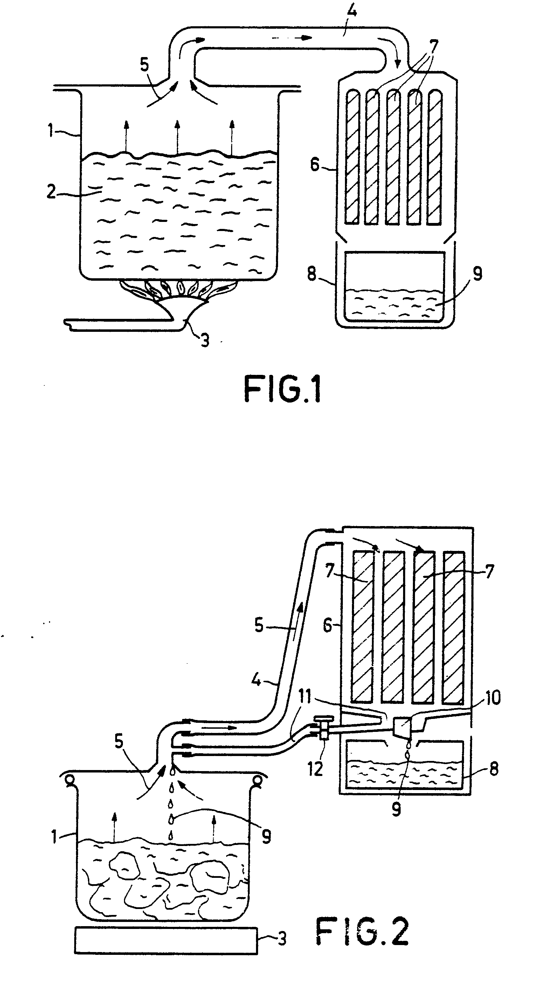

In Fig. 1 ist ein Kochtopf 1 dargestellt, der teilweise mit Kochgut 2 gefüllt ist. Unterhalb des Kochtopfes 1 ist eine Heizung 3 angeordnet. Der Kochtopf 1 ist über eine Rohrleitung 4 für Wasserdampf und Geruchsstoffe (durch Pfeile 5 angedeutet) mit einem Kondensor 6 verbunden, in dem sich Speicherplatten 7 befinden. Die Speicherplatten können auch zu einem Speichergefäß mit großer, gewellter Oberfläche zusammengefaßt sein. Unterhalb des Kondensors 6 ist ein Aufnahmebehälter 8 für flüssiges Kondensat 9 (Wasser + Geruchsstoffe) angeordnet. Das Innere des Kondensors 6 steht mit der Außenluft in Verbindung.

Die Speicherplatten 7 enthalten einen Stoff oder eine eutektische Stoffmischung, die im zuvor angegebenen Temperaturbereich schmelzen bzw. erstarren. Bei Nichtgebrauch gibt das Speichermittel an die kühlere Umgebung des Raumes Wärme ab und erstarrt dabei. Wird der Kondensor nun an das Kochgefäß angeschlossen, so gibt entweichender Wasserdampf an die kälteren Speicherplatten Wärme ab und kondensiert. Das Speichermittel bleibt so lange kalt und kann so lange Wärme aufnehmen, bis es ganz aufgeschmolzen ist. Die Menge an Speichermittel ist darum so bemessen, daß ihre Schmelzwärme der Verdampfungswärme der zu kondensierenden Wassermenge wenigstens äquivalent ist.

Die Kondensation und das Regenerieren des Speichers erfolgen beliebig oft und automatisch. Das Kondensat 9 kann einfach weggeschüttet oder in den Abfluß geleitet werden. Die sehr einfach strukturierte, nur aus glatten Wänden (z. B. aus Kunststoff oder Edelstahl) bestehende Konstruktion ist sehr leicht durch Übergießen mit heißem Wasser zu reinigen.

Der Schmelzpunkt des Speichermittels liegt, wie gesagt, zwischen 25° C und 70° C. Es kommen hierfür organische Verbindungen, z. B. Paraffine, in Frage, die in diesem Temperaturbereich schmelzen. Wegen der höheren Schmelzwärme sind aber einige Salzhydrate und Salzhydratmischungen noch besser als Speichermittel geeignet, z. B.

$CaCl_2$ . $6H_2O$ ; Schmelzpunkt 29,2° C, oder

48 Gew.% $CaCl_2$ + 4,3 Gew.% NaCl + 0,4 Gew.%

KCl + 47,3 Gew.% $H_2O$ ; Schmelzpunkt 26,8° C, oder

$Na_2HPO_4$ . 12 $H_2O$ ; Schmelzpunkt 35,2° C, oder

$CH_3COONa$ . $3H_2O$ ; Schmelzpunkt 58° C.

Ein weiteres sehr wirksames Wärmespeichermittel ist aus DE-A-2 731 572 bekannt.

Ausführungsbeispiel

Aus 1 kg geschälten, frischen Kartoffeln entweichen beim Fritieren in heißem Fett etwa 300 bis 500 g Wasser. Diese Mengen entsprechen 300 bis 500 $cm^3$ flüssigem Wasser bzw. 500 000 bis 800 000 $cm^3$ Wasserdampf. In dieser relativ großen Gasmenge sind auch verschiedene Geruchsstoffe enthalten, die als unangenehm empfunden werden.

Eine Friteuse, die dem Kochtopf 1 in Fig. 1 entspricht, wird darum sofort nach dem Eintauchen der Kartoffeln in das Fett mit einem dicht schließenden Deckel abgedeckt und der entweichende Wasserdampf 5 wird über einen angeschlossenen Schlauch 4 in den Kondensor 6 geführt. Im Kondensor 6 sind, wie in Fig. 1 gezeigt, 5 Speicherplatten 7 vertikal aufgestellt, zwischen die der Dampf 5 geführt wird. Die Platten 7 aus gewelltem, 0,1 mm starkem Edelstahl sind etwa 10 mm dick, stehen auf etwa 5 mm Abstand und enthalten je 430 cm³, d. h. zusammen etwa 2 600 cm³ Calciumchlorid-hexahydrat, $CaCl_2 . 6H_2O$. Dieses Salzhydrat hat eine relativ große Schmelzwärme von 259 J/cm³. Unter Aufschmelzen des Salzhydrates bei 29,2° C und Aufnahme der dazu erforderlichen Schmelzwärme aus dem aus der Friteuse entweichenden heißen Wasserdampf wird dieser abgekühlt und samt den darin enthaltenden Geruchsstoffen zum größten Teil kondensiert. Das flüssige und unangenehm riechende Kondensat 9 wird unter den Platten 7 in einem Gefäß 8 gesammelt und anschließend in den Ausguß geschüttet. Nach dem Gebrauch der Friteuse wird der Speicher 7 durch die kühlere Umgebung automatisch regeneriert.

In Fig. 2 ist eine abgewandelte Ausführungsform der Vorrichtung nach Fig. 1 dargestellt. Darin ist unterhalb der Speicherplatten 7 ein Kondensatüberlauf 10 angeordnet. Ferner beginnt unterhalb der Speicherplatten eine Kondensatrücklaufleitung 11 mit einem Hahn 12, die in das Kochgefäß 1 mündet.

Eine solche Anordnung hat den Vorteil, daß durch die Stellung des Hahnes 12 das Kondenswasser 9 sowohl im Kreislauf zum Kochtopf 1 zurückgeführt als auch ganz oder teilweise in der Kondensatfalle 8 abgefangen werden kann. Dies gibt einen neuen, freien Parameter bei Kochverfahren, die auf die Geschmacksbildung starken Einfluß haben können.

Wie bei der Vorrichtung nach Fig. 1 gelten auch hier die Vorzüge : Keine Dampf- und Geruchsbelastung der Wohnung ; sehr einfache Konstruktion, Handhabung und Reinigung ; automatische Regenerierung des Speichers über unbegrenzt viele Speicherzyklen.

**Patentansprüche**

1. Vorrichtung zum Kondensieren und gegebenenfalls Rückführen von Kochdämpfen, bestehend aus einem verschließbaren Kochgefäß, das über eine Leitung mit einem Kondensor verbunden ist, dessen Kühlgefäß ein Kühlmittel enthält, wobei das Kühlmittel und die Kochdämpfe bzw. kondensierte Kochdämpfe durch eine Wand getrennt sind, dadurch gekennzeichnet, daß der Kondensor (6) als Kühlmittel ein Latentwärmespeichermittel enthält, dessen Schmelzpunkt zwischen 25 und 70° C liegt und dessen Menge so bemessen ist, daß seine Schmelzwärme der zu kondensierenden Wassermenge wenigstens äquivalent ist.

2. Vorrichtung nach Anspruch 1, dadurch gekennzeichnet, daß in dem Kondensor (6) Speicherplatten (7) angeordnet sind, die das Latentwärmespeichermittel enthalten.

3. Vorrichtung nach Anspruch 2, dadurch gekennzeichnet, daß die Speicherplatten (7) zu einem Speichergefäß mit großer, gewellter Oberfläche zusammengefaßt sind.

4. Vorrichtung nach Anspruch 1, 2 oder 3, dadurch gekennzeichnet, daß der Kondensor (6) bzw. die Speicherplatten (7) als Latentwärmespeichermittel Paraffine, Salzhydrate oder Salzhydratmischungen enthalten.

5. Vorrichtung nach einem der Ansprüche 1 bis 4, dadurch gekennzeichnet, daß der Kondensor (6) über eine Kondensatrücklaufleitung (11) mit einem Hahn (12) mit dem Kochgefäß (1) verbunden ist.

**Claims**

1. A device for condensing and possibly refluxing cooking vapours, consisting of a closable cooker which is connected to a condenser by means of a pipe, the cooler of which condenser comprises a cooling agent, the cooling agent and the cooking vapours or condensed cooking vapours being separated by a wall, characterized in that the condenser (6) comprises a latent heat storage medium as a cooling agent having a melting point between 25 and 70° C and the quantity of which is such that its melting heat is at least equal to the quantity of water to be condensed.

2. A device as claimed in Claim 1, characterized in that storage plates (7) comprising the latent heat storage medium are provided in the condenser (6).

3. A device as claimed in Claim 2, characterized in that the storage plates (7) are combined to form a storage vessel having a large corrugated surface area.

4. A device as claimed in Claim 1, 2 or 3, characterized in that the condenser (6) or the storage plates (7) comprise as a latent heat storage medium paraffins, salt hydrates or salt hydrate mixtures.

5. A device as claimed in any of the Claims 1 to 4, characterized in that the condenser (6) is connected to the cooker (1) via a condensate return pipe (11) having a cock (12).

**Revendications**

1. Dispositif pour condenser et, le cas échéant, ramener les vapeurs de cuisson, constitué par un cuiseur pouvant être fermé qui est relié à un condenseur par l'intermédiaire d'un conduit, dont le cuiseur contient un agent de refroidissement, l'agent de refroidissement et les vapeurs de cuisson respectivement les vapeurs de cuisson condensées étant séparées par une paroi, caractérisé en ce que comme agent de refroidissement le condenseur (6) contient un agent d'accumulation de chaleur latente dont le point de fusion se situe entre 25 et 70 °C et dont la quantité est mesurée de façon que sa chaleur de fusion corresponde au moins à la quantité d'eau condensée.

2. Dispositif selon la revendication 1, caractérisé en ce que dans le condenseur (6) sont disposées des plaques d'accumulation (7) qui contiennent l'agent d'accumulation de chaleur latente.

3. Dispositif selon la revendication 2, caractérisé en ce que les plaques d'accumulation (7) sont réunies de façon à obtenir un réservoir d'accumulation présentant une grande surface ondulée.

4. Dispositif selon la revendication 1, 2 ou 3, caractérisé en ce que comme agent d'accumulation de chaleur latente le condenseur (6) respectivement les plaques d'accumulation (7) contiennent de la paraffine, des hydrates salins ou des mélanges d'hydrates salins.

5. Dispositif selon l'une des revendications 1 à 4, caractérisé en ce que le condenseur est relié au cuiseur (11) par l'intermédiaire d'une canalisation de retour de condensat (6) munie d'un robinet (12).

FIG.1

FIG.2